# EUROPÄISCHE PATENTSCHRIFT

(11) **EP 3 502 527 B1**
(45) Veröffentlichungstag und Bekanntmachung des Hinweises auf die Patenterteilung: **16.12.2020**
(21) Anmeldenummer: 17465597.7
(22) Anmeldetag: 19.12.2017
(51) Int. Cl.: F16K 1/44, F16K 25/00

(54) **VENTIL**
VALVE
SOUPAPE

(43) Veröffentlichungstag der Anmeldung: 26.06.2019
(73) Patentinhaber: Vitesco Technologies GmbH, 30165 Hannover (DE)
(72) Erfinder: Petca, Eduard Cornel, 300693 Timisoara (RO)

(56) Entgegenhaltungen:
- EP-A1- 1 983 239
- US-A1- 2003 098 074
- US-A1- 2004 075 072
- US-A1- 2005 279 956
- US-A1- 2009 267 014

## Beschreibung

Gegenstand der Erfindung ist ein Ventil mit den Merkmalen des Oberbegriffes von Patentanspruch 1.

Solche Ventile werden zum Öffnen und Verschließen von Abgasleitungen in Kraftfahrzeugen eingesetzt und sind somit bekannt. Wichtig für die Funktion solcher Ventile ist die Dichtheit, mit der das Ventil die Leitung verschließt. Gerade bei Gasen ist das Erreichen einer geringen Leckrate mit hohem Aufwand verbunden. Der Ventilsitz und die Dichtfläche des Ventilkörpers müssen dicht aneinander anliegen. Deren Oberflächen müssen eine hohe Oberflächengüte hinsichtlich Rauheit und Toleranzen aufweisen. Gleichzeitig müssen die Dichtfläche und der Ventilsitz sehr geringen Formtoleranzen genügen. Schließlich muss die Bewegung des Ventilkörpers über den Stößel und den Antrieb den hohen Anforderungen an die Lagetoleranz entsprechen. Des Weiteren sind oftmals Beschichtungen erforderlich, um auch über die Laufzeit ein möglichst gleich bleibendes Ventilverhalten zu gewährleisten. Nachteilig hierbei ist der hohe Aufwand, der erforderlich ist, um die ganzen Forderungen zu erfüllen.

Aus der US 2003/0098074 A1 ist ein Ventil bekannt, dessen Schließkörper sich aus einem elastischen Bauteil und einem unelastischen Bauteil zusammensetzt. Das unelastische Bauteil bildet eine erste Dichtung, die näher am Ventilstößel angeordnet ist, während das elastische Bauteil eine zweite Dichtung aufweist. Der aus den beiden Bauteilen zusammengesetzte Schließkörper hat die Form eines etwa ebenen Ringes.

Aus der US 2004/0075072 A1 ist ein Ventil bekannt, das ebenfalls zwei Dichtungen aufweist, wobei ein konischer Abschnitt des Ventilschließkörpers mit einer ersten Dichtfläche und ein plattenförmiger Abschnitt des Schließkörpers mit einem elastischen Dichtkörper in Eingriff stehen.

Weitere Ventile mit zwei Dichtungen sind aus der US 2005/0279956 A1, der EP 1 983 239 A1 und der US 2009/0267014 A1 bekannt.

Der Erfindung liegt die Aufgabe zugrunde, ein Ventil zu schaffen, welches mit geringem Aufwand herstellbar ist, dabei eine möglichst geringe Leckrate besitzt und das langzeitstabil arbeitet.

Gelöst wird die Aufgabe bei einem Ventil der angegebenen Art durch die kennzeichnenden Merkmale von Patentanspruch 1.

Mit dem Vorsehen einer zweiten Dichtung wird eine Art Stufendichtung erreicht. Die erste Dichtung, welche vom ersten Ventilsitz und der ersten Dichtfläche gebildet wird, entspricht im Wesentlichen der eigentlichen Dichtung. Allerdings sind die Anforderungen an die Leckrate gering. Diese Leckrate wird von der zweiten Dichtung aufgefangen, welche von der zweiten Dichtfläche und dem zweiten Ventilsitz gebildet wird. Da die zweite Dichtung ebenfalls zur Abdichtung beiträgt, muss die Abdichtung nicht mehr ausschließlich von der ersten Dichtung erbracht werden. Daher sind die Anforderungen an Oberflächengüten, Form- und Lagetoleranzen geringer. Damit kann der Aufwand für die erste Dichtung deutlich reduziert werden. Eine weitere Verringerung des Aufwandes wird zudem dadurch erreicht, dass sowohl beide Dichtflächen und beide Ventilsitze an nur einem Schließkörper und einem Ventilkörper ausgebildet sind. Zusätzliche Bauteile sind nicht erforderlich. Darüber hinaus können die Anforderungen für die Verbindung des Schließkörpers über den Stößel zum Antrieb reduziert werden. Der Vorteil besteht darin, dass das gesamte Ventil deutlich günstiger hergestellt werden kann. Zudem ist der Aufwand mit der zweiten Dichtung deutlich geringer. Auf diese Weise lässt sich ein günstigeres Ventil mit einer deutlich verbesserten Leckrate erzeugen.

In Abhängigkeit von den Dichtigkeitswerten der beiden Dichtungen lässt sich die Elastizität der Materialpaarung durch die Werkstoffauswahl einstellen. Es ist aber auch möglich, die Elastizität der Materialpaarung gemäß einer anderen vorteilhaften Ausgestaltung dadurch einzustellen oder zu unterstützen, wie die jeweilige Dichtfläche bezüglich ihrer Steifigkeit zum Grundkörper ausgebildet ist. So kann nach einer vorteilhaften Ausgestaltung der Schließkörper eine Gestalt besitzen, bei der die erste Dichtfläche starrer zum Stößel angebunden ist als die zweite Dichtfläche.

Mit dieser Ausbildung wird erreicht, dass die zweite Dichtfläche flexibler bei der Anlage am zweiten Ventilsitz ist. Dies ermöglicht der zweiten Dichtung, Toleranzen, Form- und Lageabweichungen in einem größeren Maße auszugleichen als es der ersten Dichtung möglich ist. Eine solch flexiblere Anbindung der zweiten Dichtung gegenüber der ersten Dichtung am Grundkörper ist beispielsweise durch entsprechende Formelemente des Grundkörpers möglich. Bevorzugt sind das Formelemente, welche eine Federwirkung aufweisen, wie beispielsweise Bögen, Biegebalken oder Stege.

In einer vorteilhaften Ausgestaltung ist der zweite Ventilsitz koaxial zum ersten Ventilsitz angeordnet. Mit dieser Anordnung benötigt das erfindungsgemäße Ventil in axialer Erstreckung keinen zusätzlichen Bauraum.

Nach einer anderen besonders vorteilhaften Ausgestaltung, besitzt der erste Ventilsitz mit der ersten Dichtfläche eine härtere Materialpaarung als der zweite Ventilsitz mit der zweiten Dichtfläche . Die Verwendung unterschiedlicher Materialpaarungen ermöglicht eine optimale Auslegung der jeweiligen Dichtung bezogen auf die vorteilhaften Eigenschaften der Materialpaarung. Mit einer härteren Materialpaarung kann eine hohe Dichtheit bei geringer Leckrate erzeugt werden. Dies erfordert zwar auch hohe Anforderungen an die Gestaltung von Dichtfläche und Ventilsitz, allerdings müssen die Anforderungen nicht zu hoch sein, da nachfolgend die zweite Dichtung angeordnet ist. Die weichere Materialpaarung erlaubt einen deutlichen Ausgleich hinsichtlich Form- und Lagetoleranzen und Oberflächengüte. Somit kann die zweite Dichtung dafür genutzt werden, die aufgrund der geringeren Anforderungen höhere Leckrate aufzufangen und nur noch gegen diese geringen Mengen abzudichten.

In einer kostengünstigen Ausgestaltung besteht die härtere Materialpaarung aus dem Schließkörper und dem Ventilsitz. Schließkörper und Ventilsitz sind in den meisten Fällen aus Metall gefertigt und kommen somit für die härtere Materialpaarung in Frage. Aufwendige Neukonstruktionen werden damit vermieden. Zudem kann für weitere Ausgestaltungen auf bereits vorhandene Konstruktionen zurückgegriffen werden.

Eine weichere Materialpaarung lässt sich mit geringem Aufwand bereits dadurch erreichen, dass die weichere Materialpaarung durch die Verwendung mindestens eines Kunststoffes oder mindestens eines Elastomers entsteht.

Bei der Erfindung ist am Schließkörper im Bereich der zweiten Dichtfläche ein Kunststoff- oder Elastomerbauteil angeordnet. Die Anordnung des entsprechenden Kunststoff- oder Elastomerbauteils ist mit wenig Aufwand durchführbar.

In Abhängigkeit von den Einsatzbedingungen oder dem vorhandenen Bauraum kann der Schließkörper im Bereich der zweiten Dichtfläche auch eine Kunststoff- oder Elastomerbeschichtung besitzen. Diese Ausgestaltung hat den Vorteil, dass eine Beschichtung dünner als ein separates Bauteil ausgebildet ist.

An einem Ausführungsbeispiel wird die Erfindung näher erläutert. Dabei zeigen
- Fig. 1: ein erfindungsgemäßes Ventil und
- Fig.2a, 2b: vergrößerte Darstellungen der beiden Dichtungen.

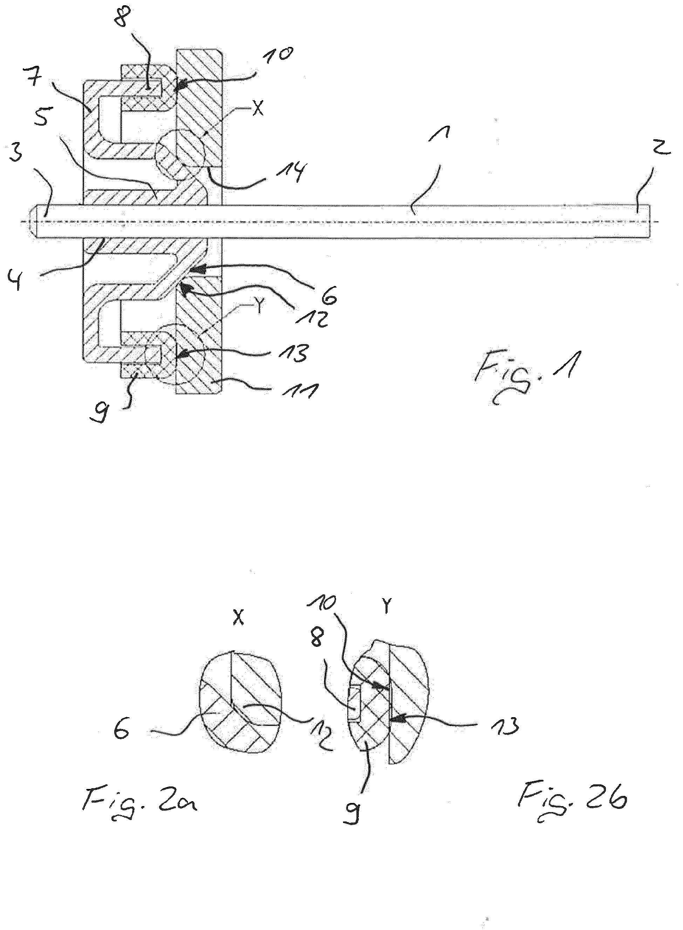

Das Ventil in Figur 1 besteht aus einem nicht dargestellten Antrieb, wie einem Elektromotor mit einem Getriebe zum Übersetzen der rotatorischen Bewegung der Welle des Elektromotors in eine translatorische Bewegung des Ventils. An dem Getriebeausgang ist ein Stößel 1 mit seinem Ende 2 befestigt. An dem gegenüberliegenden Ende 3 des Stößels 1 ist ein rotationssymmetrischer Schließkörper 3 über eine Schweißverbindung 4 mit dem Stößel 1 verbunden. Der Schließkörper 3 besitzt einen Grundkörper 5 mit einer ersten Dichtfläche 6. Vom Grundkörper 5 führt ein bogenförmiger Abschnitt 7 radial nach außen, an dessen äußerem Ende 8 ein Elastomerbauteil 9 angeordnet ist. Das Elastomerbauteil 9 besitzt eine zweite Dichtfläche 10. Beide Dichtflächen 6, 10 stehen im gezeigten geschlossenen Zustand des Ventils mit einem Ventilkörper 11 in Kontakt. Dabei liegt die erste Dichtfläche 6 an einem ersten Ventilsitz 12 und die zweite Dichtfläche 10 an einem zweiten Ventilsitz 13 an. Beide Ventilsitze 12, 13 sind an dem Ventilkörper 11 ausgebildet. Der erste Ventilsitz 12 ist ein die Bohrung 14 im Ventilkörper 11 begrenzender Radius. Durch die Bohrung 14 kann ein Medium im geöffneten Zustand des Ventils von einer Seite des Ventilkörpers 11 zur gegenüberliegenden Seite strömen. Sowohl der Ventilkörper 11 als auch der Schließkörper 3 bestehen aus Metall. Damit ist die Materialpaarung der ersten Dichtung 6, 12 die härtere Materialpaarung gegenüber der Materialpaarung der zweiten Dichtung 10, 13. Auch ist die erste Dichtung 6, 12 infolge der unmittelbaren Anordnung am Grundkörper 5 starrer ausgebildet als die zweite Dichtung 10, 13, was auf den flexibleren Abschnitt 7 und das Elastomerbauteil 9 zurückzuführen ist. Damit lassen sich radial außen stärker wirkende Toleranzen, Form- und Lageabweichungen wirksam ausgleichen.

Figur 2a zeigt die erste Dichtung 6, 12. Aufgrund der Metall-Metall-Paarung und der mit dem Radius erzielten kreisringförmigen Dichtung 6, 12 wird eine hohe Dichtwirkung mit niedriger Leckrate erzielt. Der konisch wirkende Radius hat eine zentrierende Wirkung beim Schließen des Ventils.

Die Dichtung 10, 13 in Figur 2b führt durch das den Schließkörper 3 am Ende 8 umgebende Elastomerbauteil 9 zu einer flächigen, kreisringförmigen Dichtung. Diese flächige Dichtung behält auch dann noch ihre Dichtwirkung, wenn z.B. der Stößel nicht ganz parallel zur Achse der Bohrung 14 ausgerichtet ist und dadurch das Elastomerbauteil 9 nicht überall plan am Ventilkörper 11 aufliegt.

## Patentansprüche

1. Ventil mit einem Antrieb, einem mit dem Antrieb verbundenen Stößel (1), einem Schließkörper (3), der einen Grundkörper (5) mit einer ersten Dichtfläche (6) besitzt und an dem Ende des Stößels (1) angeordnet ist, welches der Verbindung mit dem Antrieb gegenüberliegt, einem Ventilkörper (11) mit einem ersten Ventilsitz (12), an dem der Schließkörper (3) im geschlossenen Zustand des Ventils mit seiner ersten Dichtfläche (6) anliegt, wobei der Schließkörper (3) eine zweite Dichtfläche (10) besitzt, die im geschlossenen Zustand des Ventils an einem zweiten Ventilsitz (13) des Ventilkörpers (11) anliegt, wobei vom Grundkörper (5) ein durch seine Form eine Federwirkung aufweisender bogenförmiger Abschnitt (7) radial nach außen führt, an dessen äußerem Ende ein die zweite Dichtfläche (10) bildendes Kunststoff- oder Elastomerbauteil (9) oder ein solches mit Kunststoff- oder Elastomerbeschichtung angeordnet ist, **dadurch gekennzeichnet, dass** das Teil (9) zu einer flächigen kreisringförmigen, senkrecht zur Stößelachse verlaufenden Dichtung führt, wobei der erste Ventilsitz (12 ) ein die Bohrung (14) im Ventilkörper (11) begrenzender konischer Radius ist, der eine zentrierende Wirkung in Bezug auf den Schließkörper (3) beim Schließen des Ventils zur Erzielung einer kreisringförmigen Dichtung ausübt.

2. Ventil nach Anspruch 1, **dadurch gekennzeichnet, dass** der erste Ventilsitz (12) mit der ersten Dichtfläche (6) eine härtere Materialpaarung aufweist als der zweite Ventilsitz (13) mit der zweiten Dichtfläche (10).

3. Ventil nach Anspruch 2, **dadurch gekennzeichnet, dass** die härtere Materialpaarung aus dem Schließkörper (3) und dem ersten Ventilsitz (11) besteht.

## Claims

1. Valve with a drive, with a plunger (1) connected to the drive, with a closing body (3), which has a main body (5) with a first sealing surface (6) and which is arranged at that end of the plunger (1) which is situated opposite the connection to the drive, and with a valve body (11) with a first valve seat (12) against which the closing body (3) bears by way of its first sealing surface (6) in the closed state of the valve, wherein the closing body (3) has a second sealing surface (10) which bears against a second valve seat (13) of the valve body (11) in the closed state of the valve, wherein an arcuate portion (7) which has a resilient action owing to its shape leads radially outwards from the main body (5), at the radially outer end of which arcuate portion there is arranged a plastics or elastomer component (9) which forms the second sealing surface (10) or such a component with plastics or elastomer coating, **characterized in that** the part (9) gives rise to an areal, circular-ring-shaped seal running perpendicular to the plunger axis, wherein the first valve seat (12) is a conical radius which delimits the bore (14) in the valve body (11) and which imparts a centring action in relation to the closing body (3) during the closing of the valve in order to realize a circular-ring-shaped seal.

2. Valve according to Claim 1, **characterized in that** the first valve seat (12) with the first sealing surface (6) have a harder material pairing than the second valve seat (13) with the second sealing surface (10).

3. Valve according to Claim 2, **characterized in that** the harder material pairing is composed of the closing body (3) and the first valve seat (11).

## Revendications

1. Soupape comprenant un entraînement, un piston (1) relié à l'entraînement, un corps de fermeture (3) qui possède un corps de base (5) pourvu d'une première surface d'étanchéité (6) et qui est disposé à l'extrémité du piston (1) qui est opposée à la liaison avec l'entraînement, un corps de soupape (11) pourvu d'un premier siège de soupape (12) sur lequel le corps de fermeture (3) est en appui avec sa première surface d'étanchéité (6) lorsque la soupape est fermée, le corps de fermeture (3) possédant une deuxième surface d'étanchéité (10) qui, lorsque la soupape est fermée, est en appui sur un deuxième siège de soupape (13) du corps de soupape (11), une portion (7) en forme d'arc, qui a un effet de ressort en raison de sa forme, s'étendant radialement vers l'extérieur depuis le corps de base (5), portion à l'extrémité extérieure de laquelle est disposé un composant (9) en matière synthétique ou en élastomère formant la deuxième surface d'étanchéité (10) ou un tel composant pourvu d'un revêtement en matière synthétique ou en élastomère, **caractérisée en ce que** le composant (9) débouche sur une garniture d'étanchéité annulaire sensiblement bidimensionnelle s'étendant perpendiculairement à l'axe du piston,
le premier siège de soupape (12) ayant un rayon conique qui délimite l'alésage (14) ménagé dans le corps de soupape (11), et qui a un effet de centrage par rapport au corps de fermeture (3) lors de la fermeture de la soupape pour réaliser une étanchéité annulaire.

2. Soupape selon la revendication 1, **caractérisée en ce que** le premier siège de soupape (12) pourvu de la première surface d'étanchéité (6) présente une paire de matériaux plus dure que celle du deuxième siège de soupape (13) pourvu de la deuxième surface d'étanchéité (10).

3. Soupape selon la revendication 2, **caractérisée en ce que** la paire de matériaux plus dure comprend le corps de fermeture (3) et le premier siège de soupape (11).
